# EUROPÄISCHE PATENTSCHRIFT

(11) **EP 1 456 053 B1**
(45) Veröffentlichungstag und Bekanntmachung des Hinweises auf die Patenterteilung: **18.02.2009**
(21) Anmeldenummer: 02779210.0
(22) Anmeldetag: 14.11.2002
(51) Int. Cl.: B60W 10/06, B60W 10/08, B60W 20/00, F02D 31/00, F02D 41/14

(54) **VERFAHREN ZUR EINSTELLUNG EINES SOLL-BETRIEBSZUSTANDES EINES HYBRIDANTRIEBES EINES FAHRZEUGES**
METHOD FOR SETTING A DESIRED OPERATING STATE OF A HYBRID DRIVE OF A VEHICLE
PROCEDE DE REGLAGE D'UN ETAT DE FONCTIONNEMENT DE CONSIGNE D'UN SYSTEME DE PROPULSION HYBRIDE D'UN VEHICULE

(30) Priorität: 06.12.2001 DE 10160018
(43) Veröffentlichungstag der Anmeldung: 15.09.2004
(73) Patentinhaber: ROBERT BOSCH GMBH, 70442 Stuttgart (DE)
(72) Erfinder: LOEFFLER, Juergen, 71638 Ludwigsburg (DE); TUMBACK, Stefan, 70469 Stuttgart (DE)
(74) Vertreter: Gleiss & Grosse
(86) Internationale Anmeldenummer: PCT/DE2002/004203
(87) Internationale Veröffentlichungsnummer: WO 2003/053733

(56) Entgegenhaltungen:
- US-A1- 2001 037 645
- US-B1- 6 301 529

## Beschreibung

Die Erfindung betrifft ein verfahren zur Einstellung Die Erfindung betrifft ein Verfahren zur Einstellung eines Soll-Betriebszustandes eines Hybridantriebes eines Fahrzeuges, wobei der Hybridantrieb als Antriebsmaschinen eine Verbrennungskraftmaschine und wenigstens eine elektrische Maschine umfasst und die Abtriebswellen der Antriebsmaschinen mit einem Antriebsstrang des Fahrzeuges wirkverbindbar sind.

### Stand der Technik

Hybridantriebe für Fahrzeuge sind bekannt. Bei den hier angesprochenen Hybridantrieben wird eine Verbrennungskraftmaschine mit wenigstens einer elektrischen Maschine kombiniert, so dass mehrere Antriebsquellen für das Fahrzeug zur Verfügung stehen. Entsprechend vorgegebener Anforderungen durch einen Fahrzeugführer können hierbei die Antriebsquellen wahlweise ihre Antriebsmomente in einen Antriebsstrang des Fahrzeuges einspeisen. Hierdurch ergeben sich in an sich bekannter Weise in Abhängigkeit konkreter Fahrsituationen unterschiedliche Antriebsgestaltungsmöglichkeiten, die insbesondere der Verbesserung eines Fahrkomforts und der Reduzierung eines Energieeinsatzes sowie der Reduzierung einer Schadstoffemission dienen.

Bei Hybridantrieben für Fahrzeuge sind serielle Anordnungen, parallele Anordnungen und gemischte Anordnungen von Verbrennungskraftmaschine und elektrischen Maschinen bekannt. Je nach Anordnung sind die elektrischen Maschinen direkt oder indirekt in den Antriebsstrang der Verbrennungskraftmaschine schaltbar. Zur Wirkverbindung der Verbrennungskraftmaschine und/oder der elektrischen Maschinen ist bekannt, diese über Getriebe, beispielsweise Planetengetriebe oder dergleichen, und Kupplungen miteinander wirkverbindbar anzuordnen.

Um einen Fahrerwunsch nach einer Antriebsleistung des Hybridantriebes optimal umsetzen zu können, ist eine koordinierte Ansteuerung der Antriebsmaschinen des Hybridantriebes erforderlich, die bekanntermaßen durch ein so genanntes Motorsteuergerät erfolgt. Die Ansteuerung der Antriebsmaschinen kann hierbei basierend auf einem durch das Motorsteuergerät zu bestimmenden Soll-Betriebszustand des Hybridantriebes erfolgen. Ziel bei der Bestimmung dieses Soll-Betriebszustandes ist insbesondere ein geringer Kraftstoffverbrauch, ein dynamisches Fahrverhalten des Fahrzeuges und eine geringe Schadstoffemission. Ein Fahrverhalten des Fahrzeuges wird hierbei entscheidend durch die dynamische Leistungsreserve des Hybridantriebes bestimmt, die an den durch das Motorsteuergerät eingestellten Soll-Betriebszuständen zur Verfügung steht. Bekannt ist, die Soll-Betriebszustände durch Steuerung der Verbrennungskraftmaschine einzustellen. Die sich durch die zusätzlichen elektrischen Antriebsmaschinen ergebenden zusätzlichen Freiheitsgrade werden hierbei nicht berücksichtigt.

Ein Verfahren zur Einstellung des Soltbetriebszustandes eines Hybridantriebes nach dem Oberbegriff des Anspruchs 1 wird in US-B1-6 301 529 offenbart.

### Vorteile der Erfindung

Das erfindungsgemäße Verfahren mit den in Anspruch 1 genannten Merkmalen bietet demgegenüber den Vorteil, dass bei Hybridantrieben mit einer Verbrennungskraftmaschine und wenigstens einer elektrischen Maschine eine optimale Ansteuerung aller Antriebsmaschinen eines Hybridantriebes zur Einstellung eines Soll-Betriebszustandes erfolgt. Dadurch, dass in Abhängigkeit der momentanen Leistungsanforderung an die Antriebsmaschinen des Hybridantriebes und der momentanen Leistungskapazität der Antriebsmaschinen des Hybridantriebes eine optimale Kurbelwellendrehzahl der verbrennungskraftmaschine ermittelt wird und diese Kurbelwellendrehzahl durch koordinierte Ansteuerung der Antriebsmaschinen unter Beibehaltung der Leistungsanforderungen eingestellt wird, wird vorteilhaft möglich, einen Soll-Betriebszustand des Hybridantriebes optimal in Hinblick auf einen Kraftstoffverbrauch, ein dynamisches Fahrverhalten und eine geringe Schadstoffemission einzustellen.

In bevorzugter Ausgestaltung der Erfindung ist vorgesehen, dass die optimale Kurbelwellendrehzahl aus einem Drehzahlbereich ausgewählt wird, der zwischen einer optimalen Kurbelwellendrehzahl für einen ökonomischen Fahrbetrieb und einer optimalen Kurbelwellendrehzahl für einen leistungsorientierten Fahrbetrieb liegt und bei der Bestimmung der optimalen Kurbelwellendrehzahl eine momentane Fahrsituation des Fahrzeugs und ein Fahrertyp des Fahrzeugs berüksichtigt werden. Hierdurch wird vorteilhaft möglich, bei der Festlegung der optimalen Kurbelwellendrehzahl sowohl eine hinsichtlich Kraftstoffverbrauch und Schadstoffemission besonders günstige Betriebsweise der Verbrennungskraftmaschine auszuwählen, wobei jedoch ein erforderliches dynamisches Fahrverhalten optimal berücksichtigt wird.

Weitere bevorzugte Ausgestaltungen der Erfindung ergeben sich aus den in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: ein Blockschaltbild des erfindungsgemäßen Verfahrens;
- Figur 2: ein Blockschaltbild einer koordinierten An- steuerung des Hybridantriebes;
- Figur 3: ein Blockschaltbild zur Bestimmung einer optimalen Drehzahl der Verbrennungskraft- maschine;
- Figur 4: Kennlinien zur Ermittlung der optimalen Drehzahl der Verbrennungskraftmaschine und
- Figur 5: Leistungskennlinien eines Hybridantriebes.

### Beschreibung der Ausführungsbeispiele

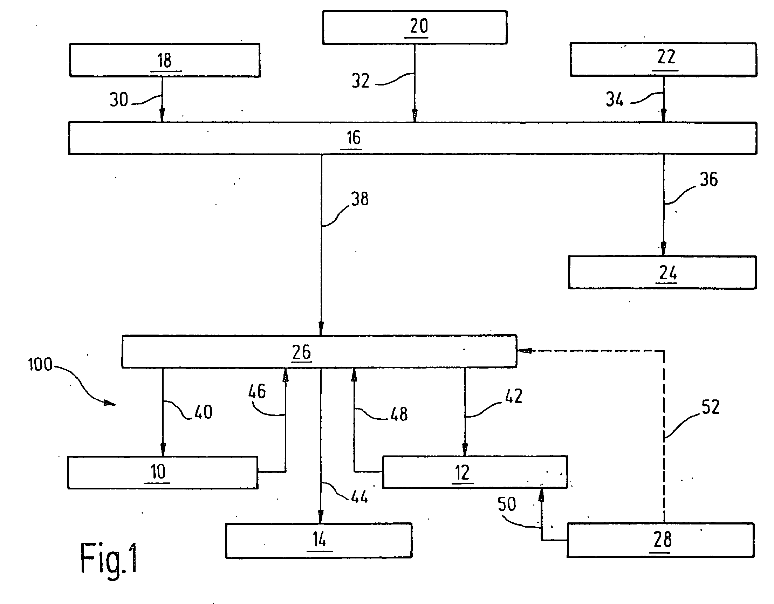

Figur 1 zeigt in einem Blockschaltbild einen Ausschnitt aus einem Motorsteuergerät zur Ansteuerung eines Hybridantriebes eines Fahrzeuges. Der Hybridantrieb umfasst eine Verbrennungskraftmaschine 10 sowie wenigstens eine elektrische Maschine 12. Diese wirken über ein Getriebe 14 auf einen Antriebsstrang des Fahrzeuges.

Das Motorsteuergerät umfasst einen so genannten Koordinator 16 von Längsbewegungen - also in beziehungsweise entgegen einer gedachten Fahrtrichtung des Fahrzeuges. Diese Längsbewegungen des Fahrzeuges werden durch eine Anforderung eines Fahrzeugführers, beispielsweise durch ein Fahrpedal 18 und ein Bremspedal 20, ausgelöst. Ferner kann eine Anforderung an die Längsbewegung des Fahrzeuges durch einen Fahrautomat 22 erfolgen. Durch Fahrpedal 18 und/oder Bremspedal 20 und/oder Fahrautomat 22 ist eine Beschleunigung beziehungsweise Verzögerung des Fahrzeuges in Längsrichtung anforderbar, die durch den Hybridantrieb 100 beziehungsweise eine Bremseinrichtung 24 des Fahrzeugs umgesetzt werden. Zur koordinierten Ansteuerung des Hybridantriebes 100, das heißt der einzelnen Komponenten des Hybridantriebes 100, ist ein so genannter Koordinator 26 vorgesehen. Das Fahrzeug umfasst ferner ein elektrisches Bordnetz 28 zur Versorgung der elektrischen Maschinen 12 und weiterer elektrischer Aggregate des Fahrzeuges. Bestandteil des Bordnetzes 28 ist eine Fahrzeugbatterie, aus der das Bordnetz gespeist wird.

Vom Fahrpedal 18 erhält der Koordinator 16 ein Signal 30, das eine Soll-Leistung am Ausgang des Getriebes 14 anfordert. Vom Bremspedal 20 erhält der Koordinator 16 ein Signal 32, das ein Soll-Moment an den Rädern des Fahrzeuges anfordert. Vom Fahrautomaten 22 schließlich erhält der Koordinator 16 ein Signal 34, das eine Fahrzeug-Längsbeschleunigung anfordert. Der Koordinator 16 bewertet und verarbeitet die Signale 30, 32 und 34 und stellt ein dem Soll-Bremsmoment entsprechendes Signal 36 bereit, das vom Bremssystem 24 angefordert wird. Ferner wird ein Signal 38 vom Koordinator 16 bereitgestellt, das einer Soll-Antriebsleistung am Ausgang des Getriebes 14 entspricht und vom Koordinator 26 für den Hybridantrieb 100 angefordert wird. Entsprechend dem Signal 38 ist der Koordinator 26 für die Bestimmung des Soll-Betriebszustandes des Hybridantriebes 100 und die hieraus resultierende Ansteuerung der Antriebsmaschinen 10 beziehungsweise 12 verantwortlich. Die Ansteuerung der Antriebsmaschinen 10 und 12 erfolgt so, dass die dem Signal 38 entsprechende Soll-Antriebsleistung am Ausgang des Getriebes 14 realisiert wird. Hierzu gibt der Koordinator 26 der Verbrennungskraftmaschine 10 ein Signal 40, das einem Soll-Ausgangsmoment der Verbrennungskraftmaschine 10 entspricht. Ferner gibt der Koordinator 26 ein Signal 42 an die elektrische Maschine 12 beziehungsweise bei mehreren elektrischen Maschinen 12 an die elektrischen Maschinen 12, das jeweils den Soll-Ausgangsmomenten der elektrischen Maschinen 12 entspricht. Gleichzeitig erhält das Getriebe 14 ein Signal 44, das einem Soll-Gang oder einer Soll-Übersetzung des Getriebes 14 entspricht.

Von der Verbrennungskraftmaschine 10 wird dem Koordinator 26 ein Signal 46 geliefert, das der momentanen Leistungskapazität der Verbrennungskraftmaschine 10 entspricht. Darüber hinaus liefert die elektrische Maschine 12 beziehungsweise die elektrischen Maschinen 12 ein Signal 48 an den Koordinator 26, das der momentanen Leistungskapazität der elektrischen Maschinen 12 entspricht. Diese momentanen, zur Verfügung stehenden Leistungskapazitäten 46 beziehungsweise 48 der Antriebsmaschinen 10 und 12 werden vom Koordinator 26 bei der Bereitstellung der Signale 40 und 42 für die angeforderten Soll-Signale berücksichtigt.

Bei der Bereitstellung des der Leistungskapazität der elektrischen Maschinen 12 entsprechenden Signals 48 wird ein Signal 50 berücksichtigt, das der momentanen Leistungskapazität des Bordnetzes 28, und hier insbesondere der in das Bordnetz 28 integrierten Kraftfahrzeugbatterie, entspricht. Schließlich liefert das Bordnetz 28 ein weiteres Signal 52 an den Koordinator 26, das der momentanen elektrischen Leistungsanforderung von weiteren Komponenten, Nebenaggregaten oder dergleichen des Kraftfahrzeuges entspricht.

Anhand der Übersicht in Figur 1 wird deutlich, dass die durch den Koordinator 26 erfolge koordinierte Ansteuerung der Antriebsmaschinen 10 und 12 des Hybridantriebes 100 abhängig ist von einer Soll-Antriebsleistung (Signal 38) sowie der momentanen Leistungskapazitäten der Verbrennungskraftmaschine 10 (Signal 46) und der elektrischen Antriebsmaschinen 12 (Signal 48) und weiterer Leistungsanforderungen (Signal 52) des Fahrzeuges. Hierdurch wird eine optimale Einstellung des Soll-Betriebszustandes des Hybridantriebes 100 durch Berücksichtigung der erläuterten Parameter möglich, so dass insbesondere ein geringer Kraftstoffverbrauch der Verbrennungskraftmaschine 10, eine geringe Schadstoffemission der Verbrennungskraftmaschine 10 und die optimale Vorhaltung der dynamischen Leistungsreserve des Hybridantriebes 100 gegeben ist.

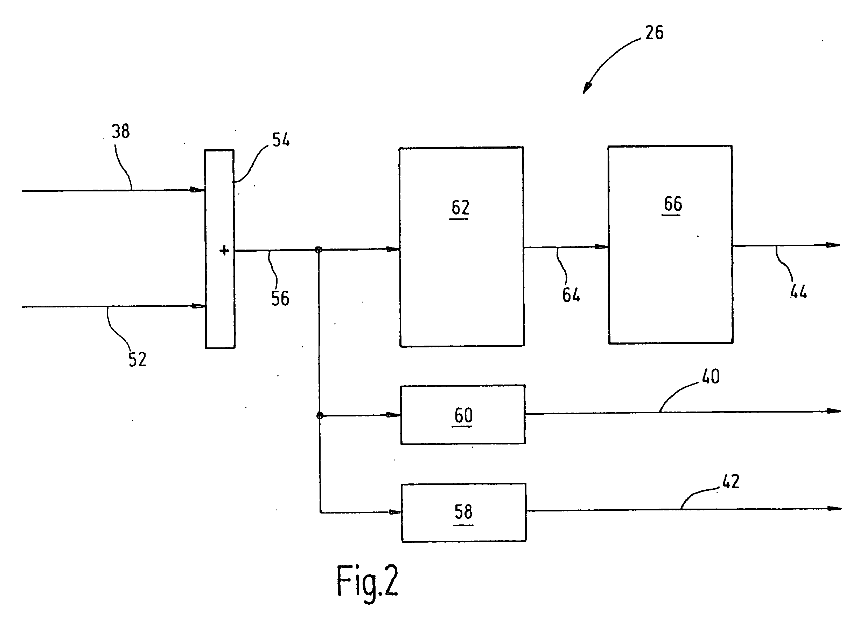

Figur 2 zeigt ein detaillierteres Blockschaltbild des Koordinators 26 für den Hybridantrieb 100. Hierbei werden die Signale 38 und 52 einem Summierglied 54 zugeführt, das ein der Soll-Leistung des Hybridantriebes 100 entsprechendes Signal 56 bereitstellt. Dieses Signal 56 wird einem Treiber 58 für die elektrischen Maschinen 12 zugeführt, das hieraus das Signal 42 bereitstellt. Ferner wird das Signal 56 einem Treiber 60 zugeführt, das jeweils das Signal 40 für das Soll-Moment der Verbrennungskraftmaschine 10 bereitstellt. Schließlich wird das Signal 56 einem Rechenblock 62 zugeführt, das den Soll-Betriebszustand des Hybridantriebes 100 ermittelt. Der Soll-Betriebszustand des Hybridantriebes 100 wird durch eine optimale Kurbelwellendrehzahl der Verbrennungskraftmaschine 10 repräsentiert, die als Signal 64 einem Rechenblock 66 zugeführt wird, der das Signal 44 an das Getriebe 14 bereitstellt, das einem Soll-Gang oder einer Soll-Übersetzung des Getriebes 14 entspricht. Durch dieses stufenweise koordinierte Vorgehen wird erreicht, dass die Kurbelwellendrehzahl der Verbrennungskraftmaschine 10 möglichst genau eingestellt werden kann.

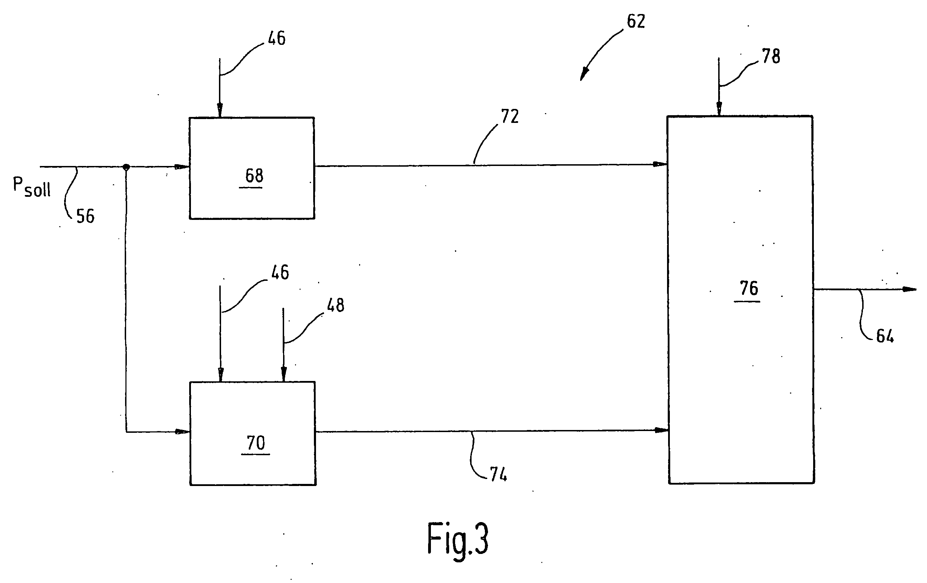

Figur 3 zeigt in einer weiteren Detaillierung in einem Blockschaltbild das Rechenwerk 62 zur Bestimmung der optimalen Kurbelwellendrehzahl der Verbrennungskraftmaschine 10. Es wird deutlich, dass das der Soll-Leistung entsprechende Signal 56 einem ersten Optimierungsbaustein 68 und einem zweiten Optimierungsbaustein 70 zugeführt wird. Dem ersten Optimierungsbaustein 68 wird ferner als Parameter das der momentanen Leistungskapazität der Verbrennungskraftmaschine 10 entsprechende Signal 46 zugeführt. Durch Verknüpfung der Signale 56 und 46 liefert der Optimierungsbaustein 68 ein Signal 72, das der optimalen Kurbelwellendrehzahl der Verbrennungskraftmaschine 10 unter ökonomischen Gesichtspunkten entspricht. Hierbei wird das der momentanen Leistungskapazität der Verbrennungskraftmaschine 10 entsprechende Signal 46, insbesondere unter Berücksichtigung der maximalen Leistung der Verbrennungskraftmaschine 10 als Funktion der Kurbelwellendrehzahl und des Wirkungsgrades der Verbrennungskraftmaschine 10 und der elektrischen Maschine 12 unter Berücksichtigung von deren bekannten Kenndaten ausgewertet. Hierbei werden insbesondere auch die aktuellen Betriebsbedingungen, wie beispielsweise atmosphärischer Luftdruck, Motortemperatur oder dergleichen berücksichtigt. Durch Verknüpfung dieser Parameter lässt sich das Signal 72, das der optimalen Kurbelwellendrehzahl der Verbrennungskraftmaschine 10 für einen möglichst ökonomischen Fahrbetrieb entspricht, bereitstellen.

Dem zweiten Optimierungsbaustein 70 werden ebenfalls das der momentanen Leistungskapazität der Verbrennungskraftmaschine 10 entsprechende Signal 46 und das der momentanen Leistungskapazität der elektrischen Maschinen 12 entsprechende Signal 48 zugeführt. Hierbei wird jeweils die maximale Leistung der Verbrennungskraftmaschine 10 und die maximale für den Fahrzeugvortrieb nutzbare Leistung der elektrischen Maschinen 12 jeweils in Abhängigkeit der Kurbelwellendrehzahl der Verbrennungskraftmaschine 10 unter Berücksichtigung der aktuellen Betriebsbedingungen, wie beispielsweise atmosphärischer Luftdruck, Motortemperatur oder dergleichen, berücksichtigt. Ferner wird die maximale für den Fahrzeugvortrieb nutzbare Leistung der elektrischen Maschinen 12 unter Berücksichtigung des Ladezustandes der Kraftfahrzeugbatterie und deren Standzeit beachtet.

Durch Verarbeitung der Signale 56, 46 und 48 liefert der Optimierungsbaustein 70 ein Signal 74, das die optimale Kurbelwellendrehzahl der Verbrennungskraftmaschine 10 für einen leistungsorientierten Fahrbetrieb bestimmt.

Die einen ökonomischen Fahrbetrieb berücksichtigende optimale Kurbelwellendrehzahl der Verbrennungskraftmaschine 10 (Signal 72) und die den leistungsorientierten Fahrbetrieb der Verbrennungskraftmaschine 10 berücksichtigende optimale Kurbelwellendrehzahl (Signal 74) werden einem Rechenwerk 76 zugeführt, das aus der durch die Signale 72 und 74 vorgegebenen Bandbreite der optimalen Kurbelwellendrehzahlen letztendlich die optimale Kurbelwellendrehzahl der Verbrennungskraftmaschine 10 für den Soll-Betriebszustand als Signal 64 festlegt. Hierbei werden als Parameter Signale 78 berücksichtigt, die eine momentane Fahrsituation des Kraftfahrzeuges, wie beispielsweise Beschleunigung, Verzögerung oder dergleichen, und/oder einen Fahrertyp des Kraftfahrzeuges, wie beispielsweise dynamischer Fahrer, bedächtiger Fahrer oder dergleichen, berücksichtigt. Diese Signale 78 können aus aktuellen, gegebenenfalls zwischengespeicherten Signalen über das Fahrverhalten des Kraftfahrzeuges über der Zeit ausgelesen werden.

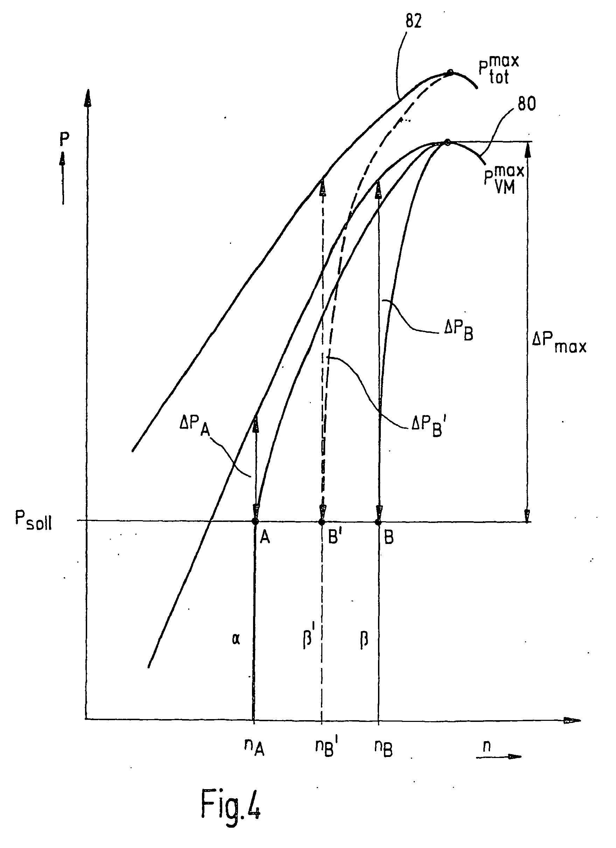

Zur Verdeutlichung des erfindungsgemäßen Verfahrens ist in Figur 4 ein Kennlinienfeld dargestellt, wobei jeweils die Leistung P des Hybridantriebes 100 über der Drehzahl n der Verbrennungskraftmaschine 10 aufgetragen ist. Eine erste Kennlinie 80 entspricht der maximalen Leistung Pₘₐₓ der Verbrennungskraftmaschine 10. Eine zweite Kennlinie 82 entspricht der maximalen Leistung Pₘₐₓ des Hybridantriebes 100 unter Berücksichtigung der maximalen Leistung der Verbrennungskraftmaschine 10 und der maximalen Leistungen der elektrischen Maschinen 12 in Abhängigkeit der Drehzahl n.

Zur Bestimmung der optimalen Kurbelwellendrehzahl der Verbrennungskraftmaschine 10 wird folgendermaßen vorgegangen:
1. Es wird eine Steuerlinie α bestimmt, die die Punkte minimalen Kraftstoffverbrauchs des Kennfeldes der Verbrennungskraftmaschine 10 für jede Leistung P verbindet.
2. Es wird eine Steuerlinie β bestimmt, für die die dynamische Leistungsreserve in jedem Punkt in Bezug auf die maximale Leistung Pₘₐₓ der Verbrennungskraftmaschine 10 eine definierten Wert einnimmt. Dieser definierte Wert kann durch einen konstanten Quotienten ΔP/ΔPₘₐₓ festgelegt werden. Hierbei ist ΔP die dynamische Leistungsreserve am betrachteten Betriebszustand und ΔPₘₐₓ die bei der Soll-Leistung P_{Soll} des betrachteten Betriebszustandes maximal mögliche Leistungsreserve.
3. Es wird eine Steuerlinie β' bestimmt, für die die dynamische Leistungsreserve in Bezug auf die maximale Leistung Pₘₐₓ₈₂ der Leistungsreserve der Steuerlinie β entspricht. In einer bevorzugten Ausführung wird die Steuerlinie β' so bestimmt, dass sie die Kurve der maximalen Leistung Pₘₐₓ₈₀ der Verbrennungskraftmaschine 10 nicht übersteigt.
4. Es wird die optimale Kurbelwellendrehzahl n_{A} der Verbrennungskraftmaschine 10 für den ökonomischen Fahrbetrieb bestimmt. Dies entspricht dem Signal 72 (Figur 3). Diese optimale Drehzahl n_{A} wird durch Schnitt der der Soll-Leistung P_{Soll} entsprechenden Gerade mit der Steuerlinie α bestimmt.
5. Es wird die optimale Kurbelwellendrehzahl n_{B} der Verbrennungskraftmaschine 10 für einen leistungsorientierten Fahrbetrieb ohne Berücksichtigung der Kapazität der elektrischen Maschine 12 bestimmt. Dies erfolgt durch Schnitt der der Soll-Leistung P_{Soll} entsprechenden Gerade mit der Steuerlinie β.
6. Es wird die optimale Kurbelwellendrehzahl n_{B'} der Verbrennungskraftmaschine 10 für den leistungsorientierten Fahrbetrieb unter Berücksichtigung der Kapazität der elektrischen Maschinen 12 (entspricht Signal 74 in Figur 3) bestimmt. Dies erfolgt wiederum durch Schnitt der der Soll-Leistung P_{Soll} entsprechenden Gerade mit der Steuerlinie β'.

Anschließend wird durch das Rechenwerk 76 aus den Drehzahlen n_{A}, n_{B} und n_{B'} in Abhängigkeit des der Fahrsituation und dem Fahrertyp entsprechenden Signals 78 die optimale Kurbelwellendrehzahl (Signal 64) der Verbrennungskraftmaschine 10 bestimmt. Dies kann insbesondere durch Interpolation erfolgen.

Die bisherigen. Erläuterungen galten für einen parallelen Hybridantrieb 100. Bei leistungsverzweigenden Hybridantrieben 100 wird die Leistung der Verbrennungskraftmaschine 10 elektromechanisch übertragen. Dies bedeutet, dass sowohl ein mechanischer als auch ein elektrischer Leistungspfad realisiert ist, über den das Fahrzeug angetrieben wird. Der elektrische Leistungspfad wird hierbei durch wenigstens zwei elektrische Maschinen 12 realisiert, die in geeigneter Weise in dem Antriebsstrang des Kraftfahrzeuges angeordnet sind. Die Kopplung zwischen mechanischem Leistungspfad und elektrischem Leistungspfad erfolgt bekannterweise über wenigstens ein Planetengetriebe, das eine Leistungsteilung zwischen mechanischem und elektrischem Leistungspfad ermöglicht. Die Drehzahlen der elektrischen Maschinen werden hier bestimmt durch die Fahrzeuggeschwindigkeit sowie eine gewählte Übersetzung der Verbrennungskraftmaschine 10 zum Abtriebsstrang. Die Drehmomente unterliegen der Forderung, dass das Drehmoment der Verbrennungskraftmaschine 10 auf den Abtriebsstrang übertragen werden muss. Sofern die elektrischen Maschinen 12 nicht an ihrer Leistungsgrenze betrieben werden, steht als zusätzliche Steuergröße das Leistungsverhältnis VE der elektrischen Maschinen zueinander zur Verfügung. Das Abtriebsmoment des Hybridantriebes kann über diese Größen eingestellt werden.

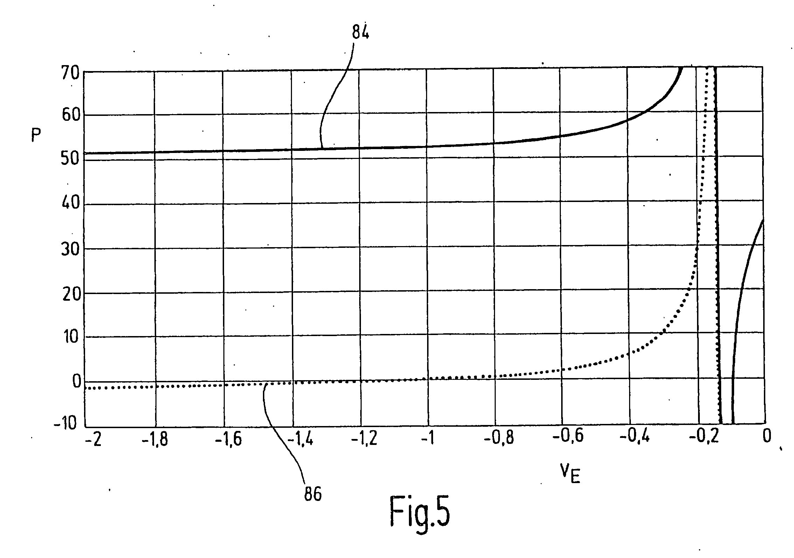

Figur 5 zeigt Kennlinien, bei denen die Leistung P über das Leistungsverhältnis VE aufgetragen ist. Mit 84 ist eine der Abtriebsleistung des Hybridantriebes entsprechende Kennlinie eingetragen. Eine Kennlinie 86 entspricht der Netto-Leistung der elektrischen Maschinen 12 in Abhängigkeit des Leistungsverhältnisses VE. Der leistungsverzweigende Hybridantrieb arbeitet bevorzugt bei einem Leistungsverhältnis VE = -1. Die Netto-Leistung (Kennlinie 86) der elektrischen Maschinen 12, die der erforderlichen Batterie-Leistung entspricht, ist in diesem Fall gleich Null. Der Hybridantrieb kann diesen Betriebszustand dauerhaft halten.

Kurzzeitige Erhöhungen der Leistungsanforderungen können in bestimmten Betriebszuständen ausgeglichen werden, indem das Leistungsverhältnis VE der elektrischen Maschinen 12 variiert wird. Die erforderliche zusätzliche Leistung wird dann der Kraftfahrzeugbatterie entnommen. Das Fahrverhalten des Kraftfahrzeuges ist in diesem Fall mit dem eines Parallel-Hybridantriebes vergleichbar. Somit kann die Einstellung des Soll-Betriebszustandes entsprechend dem anhand des Parallel-Hybridantriebes 100 erläuterten Verfahren erfolgen.

Ist eine wesentliche Erhöhung der Abtriebsleistung durch eine Veränderung des Leistungsverhältnisses VE nicht möglich, ist das Fahrverhalten vergleichbar mit einem Fahrzeug mit lediglich einem Verbrennungskraftmaschinen-Antrieb. In diesem Fall muss eine erhöhte dynamische Leistungsreserve vorgehalten werden.

Es ergibt somit folgende Vorgehensweise:
1. Es werden diejenigen Betriebspunkte bestimmt, in denen eine Erhöhung der Abtriebsleistung des Hybridantriebes kurzfristig durch eine Veränderung des Leistungsverhältnisses VE der elektrischen Maschine 12 möglich ist.
2. In Abhängigkeit von Betriebsparametern, wie beispielsweise Fahrzeuggeschwindigkeit, Leistungswunsch eines Fahrzeugfahrers, Batteriezustand und Leistungsanforderung der Nebenaggregate des Fahrzeuges, wird ein geeigneter Betriebszustand ausgewählt. Die Leistungsreserve wird möglichst gering gehalten, um einen verbrauchsgünstigen Betriebszustand der Verbrennungskraftmaschine 10 zu realisieren.
3. Wird ein diesen günstigen Betriebszustand realisierender Betriebspunkt nicht gefunden, wird auf eine Standard-Betriebspunktauswahl für den Betrieb mit lediglich Verbrennungskraftmaschine zurückgegriffen.

## Patentansprüche

1. Verfahren zu Einstellung eines Soll-Betriebszustandes eines Hybridantriebs eines Fahrzeugs, wobei der Hybridantrieb als Antriebsmaschinen eine Verbrennungskraftmaschine und wenigstens eine elektrische Maschine umfasst und die Abtriebswellen der Antriebsmaschinen mit einem Antriebsstrang des Fahrzeugs wirkverbindbar sind, wobei in Abhängigkeit der momentanen Leistungsanforderung (Signal 38) an die Antriebsmaschinen (10,12) des Hybridantriebs (100) und der momentanen Leistungskapazität (Signale 46 und 48) der Antriebsmaschinen (10,12) des Hybridantriebs (100) eine optimale Kurbelwellendrehzahl (Signal 64) der Verbrennungskraftmaschine (10) ermittelt wird, und diese Kurbelwellendrehzahl (Signal 64) durch koordinierte Ansteuerung der Antriebsmaschinen (10,12) des Hybridantriebs (100) unter Beibehaltung der momentanen Leistungsanforderungen eingestellt wird, **dadurch gekennzeichnet, dass** die optimale Kurbelwellendrehzahl (Signal 64) aus einem Drehzahlbereich ausgewählt wird, der zwischen einer optimalen Drehzahl für einen ökonomischen Fahrbetrieb (Signal 72) und einer optimalen Drehzahl für einen leistungsorientierten Fahrbetrieb (Signal 74) liegt, und bei der Bestimmung der optimalen Kurbelwellendrehzahl (Signal 64) eine momentane Fahrsituation des Fahrzeugs und ein Fahrertyp des Fahrzeugs (Signal 78) berücksichtigt werden.

2. Verfahren nach Anspruch 1, **dadurch gekennzeichnet, dass** bei der momentanen Leistungskapazität der elektrischen Maschinen (12) die momentane Leistungskapazität eines die elektrischen Maschinen (12) speisenden Bordnetzes (28) berücksichtigt wird.

3. Verfahren nach einem der vorhergehenden Ansprüche, **dadurch gekennzeichnet, dass** bei der Bestimmung der optimalen Kurbelwellendrehzahl für den ökonomischen Fahrbetrieb (Signal 72) die Leistungskapazität der Verbrennungskraftmaschine (10) (Signal 46) und eine Soll-Leistung (Signal 56) des Hybridantriebes (100) berücksichtigt werden.

4. Verfahren nach einem der vorhergehenden Ansprüche, **dadurch gekennzeichnet, dass** bei der Bestimmung der optimalen Kurbelwellendrehzahl für den leistungsorientierten Fahrbetrieb (Signal 74) die Leistungskapazität der Verbrennungskraftmaschine (10) (Signal 46), die Leistungskapazität der elektrischen Maschinen (12) (Signal 48) und die Soll-Leistung (Signal 56) des Hybridantriebes (100) berücksichtigt werden.

5. Verfahren nach einem der vorhergehenden Ansprüche, **dadurch gekennzeichnet, dass** bei der Leistungskapazität der Verbrennungskraftmaschine (10) (Signal 46) die maximale Leistung der Verbrennungskraftmaschine (10) als Funktion der Kurbelwellendrehzahl berücksichtigt wird.

6. Verfahren nach einem der vorhergehenden Ansprüche, **dadurch gekennzeichnet, dass** bei der Leistungskapazität der elektrischen Maschinen (12) (Signal 48) die maximale für den Fahrzeugvortrieb nutzbare Leistung der elektrischen Maschinen als Funktion der Kurbelwellendrehzahl berücksichtigt wird.

7. Verfahren nach einem der vorhergehenden Ansprüche, **dadurch gekennzeichnet, dass** aktuelle Betriebsbedingungen des Hybridantriebes (100), wie atmosphärischer Luftdruck, Motortemperatur oder dergleichen, berücksichtigt werden.

8. Verfahren nach einem der vorhergehenden Ansprüche, **dadurch gekennzeichnet, dass** für die maximale für den Fahrzeugvortrieb nutzbare Leistung der elektrischen Maschinen (12) ein Ladezustand und eine Standzeit einer Kraftfahrzeugbatterie des Bordnetzes (28) berücksichtigt werden.

## Claims

1. Method for setting a desired operating state of a hybrid drive of a vehicle, wherein the hybrid drive comprises, as drive machines, an internal combustion engine and at least one electric machine, and the drive shafts of the drive machines can be operatively connected to a drive train of the vehicle, wherein an optimum crankshaft rotational speed (signal 64) of the internal combustion engine (10) is determined as a function of the instantaneous power request (signal 38) to the drive machines (10, 12) of the hybrid drive (100) and the instantaneous power capacity (signals 46 and 48) of the drive machines (10, 12) of the hybrid drive (100), and this crankshaft rotational speed (signal 64) is set by coordinated actuation of the drive machines (10, 12) of the hybrid drive (100) while complying with the instantaneous power requests, **characterized in that** the optimum crankshaft rotational speed (signal 64) is selected from a rotational speed range which is between an optimum rotational speed for an economic driving mode (signal 72) and an optimum rotational speed for a power-oriented driving mode (signal 74), and an instantaneous driving situation of the vehicle and a driver type of the vehicle (signal 78) are taken into account in the determination of the optimum crankshaft rotational speed (signal 64).

2. Method according to Claim 1, **characterized in that** the instantaneous power capacity of a vehicle on-board electrical system (28) which feeds the electric machines (12) is taken into account in the instantaneous power capacity of the electric machines (12).

3. Method according to one of the preceding claims, **characterized in that** the power capacity of the internal combustion engine (10) (signal 46) and a desired power value (signal 56) of the hybrid drive (100) are taken into account in the determination of the optimum crankshaft rotational speed for the economic driving mode (signal 72).

4. Method according to one of the preceding claims, **characterized in that** the power capacity of the internal combustion engine (10) (signal 46), the power capacity of the electric machines (12) (signal 48) and the desired power value (signal 56) of the hybrid drive (100) are taken into account in the determination of the optimum crankshaft rotational speed for the power-oriented driving mode (signal 74).

5. Method according to one of the preceding claims, **characterized in that** the maximum power value of the internal combustion engine (10) is taken into account in the power capacity of the internal combustion engine (10) (signal 46) as a function of the crankshaft rotational speed.

6. Method according to one of the preceding claims, **characterized in that** the maximum power value of the electric machines which can be used for propelling the vehicle is taken into account in the power capacity of the electric machines (12) (signal 48) as a function of the crankshaft rotational speed.

7. Method according to one of the preceding claims, **characterized in that** current operating conditions of the hybrid drive (100) such as atmospheric pressure, engine temperature or the like are taken into account.

8. Method according to one of the preceding claims, **characterized in that** a charge state and a service life value of a motor vehicle battery of the vehicle on-board electrical system (28) are taken into account for the maximum power value of the electric machines (12) which can be used for propelling the vehicle.

## Revendications

1. Procédé de réglage de l'état de fonctionnement voulu d'une transmission hybride d'un véhicule, la transmission hybride comprenant comme machines d'entraînement une machine à combustion interne et au moins une machine électrique et les arbres de sortie des machines d'entraînement pouvant être reliés de manière active avec une chaîne de transmission du véhicule, une vitesse de rotation optimale du vilebrequin (signal 64) de la machine à combustion interne (10) étant déterminée en fonction de la demande de puissance momentanée (signal 38) au niveau des machines d'entraînement (10, 12) de la transmission hybride (100) et de la capacité de puissance momentanée (signaux 46 et 48) des machines d'entraînement (10, 12) de la transmission hybride (100) et cette vitesse de rotation du vilebrequin (signal 64) étant réglée par une commande coordonnée des machines d'entraînement (10, 12) de la transmission hybride (100) en maintenant les demandes de puissance momentanées, **caractérisé en ce que** la vitesse de rotation optimale du vilebrequin (signal 64) est sélectionnée dans une plage de vitesses de rotation qui s'étend d'une vitesse de rotation optimale pour un mode de conduite économique (signal 72) à une vitesse de rotation optimale pour un mode de conduite à recherche de puissance (signal 74) et une situation de conduite momentanée du véhicule et un mode de conduite du véhicule (signal 78) sont pris en compte lors de la détermination de la vitesse de rotation optimale du vilebrequin (signal 64).

2. Procédé selon la revendication 1, **caractérisé en ce que** la capacité de puissance momentanée d'un réseau de bord (28) qui alimente les machines électriques (12) est prise en compte pour la capacité de puissance momentanée des machines électriques (12).

3. Procédé selon l'une des revendications précédentes, **caractérisé en ce que** la capacité de puissance de la machine à combustion interne (10) (signal 46) et une puissance de consigne (signal 56) de la transmission hybride (100) sont prises en compte lors de la détermination de la vitesse de rotation optimale du vilebrequin pour le mode de conduite économique (signal 72).

4. Procédé selon l'une des revendications précédentes, **caractérisé en ce que** la capacité de puissance de la machine électrique (10) (signal 46), la capacité de puissance de la machine électrique (12) (signal 48) et la puissance de consigne (signal 56) de la transmission hybride (100) sont prises en compte lors de la détermination de la vitesse de rotation optimale du vilebrequin pour le mode de conduite à recherche de puissance (signal 74).

5. Procédé selon l'une des revendications précédentes, **caractérisé en ce que** la puissance maximale de la machine à combustion interne (10) en fonction de la vitesse de rotation du vilebrequin est prise en compte pour la capacité de puissance de la machine à combustion interne (10) (signal 46).

6. Procédé selon l'une des revendications précédentes, **caractérisé en ce que** la puissance maximale de la machine électrique utilisable pour l'avance du véhicule en fonction de la vitesse de rotation du vilebrequin est prise en compte pour la capacité de puissance de la machine électrique (12) (signal 48).

7. Procédé selon l'une des revendications précédentes, **caractérisé en ce que** les conditions de fonctionnement courantes de la transmission hybride (100), comme la pression atmosphérique, la température du moteur ou similaire, sont prises en compte.

8. Procédé selon l'une des revendications précédentes, **caractérisé en ce qu'**un état de charge et un temps d'utilisation d'une batterie de véhicule automobile du réseau de bord (28) sont pris en compte pour la puissance maximale de la machine électrique (12) utilisable pour l'avance du véhicule.
